(19) **Europäisches Patentamt / European Patent Office / Office européen des brevets**

(11) **EP 4 670 965 A1**

(12) **EUROPEAN PATENT APPLICATION**
published in accordance with Art. 153(4) EPC

(43) Date of publication:
**31.12.2025 Bulletin 2026/01**

(21) Application number: **24760075.2**

(22) Date of filing: **01.02.2024**

(51) International Patent Classification (IPC):
**B32B 9/00** (2006.01)

(52) Cooperative Patent Classification (CPC):
**B32B 9/00**

(86) International application number:
**PCT/JP2024/003310**

(87) International publication number:
**WO 2024/176768 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 JP 2023025316**

(71) Applicant: Toyo Seikan Group Holdings, Ltd.
Shinagawa-ku
Tokyo 141-8627 (JP)

(72) Inventors:
• **NANGOU, Shunya**
  **Yokohama-shi, Kanagawa 240-0062 (JP)**
• **OKUYAMA, Shinpei**
  **Tokyo 141-8627 (JP)**
• **TAKAYAMA, Keisuke**
  **Yokohama-shi, Kanagawa 240-0062 (JP)**
• **KAWANISHI, Misato**
  **Yokohama-shi, Kanagawa 240-0062 (JP)**
• **OZAWA, Kazumi**
  **Yokohama-shi, Kanagawa 240-0062 (JP)**

(74) Representative: **J A Kemp LLP**
**80 Turnmill Street**
**London EC1M 5QU (GB)**

(54) **MOISTURE BARRIER LAMINATED FILM**

(57) Disclosed herein is a moisture barrier laminated film 10 including an inorganic barrier layer 3 and a hygroscopic layer 5 on a plastic base material 1. The inorganic barrier layer 5 is disposed closer to a high moisture atmosphere than the hygroscopic layer 5. The moisture barrier laminated film is characterized in that a quasi-hygroscopic layer 7 is provided between the inorganic barrier layer 3 and the hygroscopic layer 5, and water solubility coefficients in the quasi-hygroscopic layer 7 and in the hygroscopic layer 5 satisfy a condition represented by the following expression (1): $0.1S2 \leq S1 < S2$ (1), where $S1$ is a water solubility coefficient at 85°C in the quasi-hygroscopic layer, and $S2$ is a water solubility coefficient at 85°C in the hygroscopic layer.

FIG. 1

EP 4 670 965 A1

**Description**

Technical Field

The present invention relates to a moisture barrier laminated film having an inorganic barrier layer and a hygroscopic layer.

Background Art

As a means for improving properties, particularly gas barrier properties, of various plastic base materials, it is known to form an inorganic barrier layer made of silicon oxide or the like, by vapor deposition, on a surface of a plastic base material (Patent Document 1).

In addition, various electronic devices widely used in recent years, such as organic electroluminescence (organic EL), solar cells, touch panels, and electronic paper are vulnerable to charge leakage, and therefore high moisture barrier properties are required for plastic base materials forming the circuit boards and the like or plastic base materials such as films for sealing circuit boards. The formation of an inorganic barrier layer noted above cannot address the high demand for moisture barrier properties, and hence various proposals have been made to improve the moisture barrier properties.

For example, in Patent Documents 1 to 3, the present applicants have proposed a gas barrier laminate in which a moisture trap layer having a specific granular hygroscopic agent dispersed in an ionic polymer matrix is formed on an inorganic barrier layer on a plastic base material.

As described above, there have been proposed various laminates having a layer configuration in which an inorganic barrier layer and a hygroscopic layer (water capturing layer) are combined in order to highly enhance the moisture barrier properties, but all of these laminates have had a problem in which excellent moisture barrier properties are not sufficiently exerted due to occurrence of deactivation of the hygroscopic layer in a short period of time.

Furthermore, in Patent Document 4, the present applicants have proposed a moisture barrier laminate (film) that stably exerts excellent barrier properties against moisture over a long period of time, which has been already patented.

The technology of Patent Document 4 is a technology that forms a thick organic layer being excellent in moisture diffusivity and having a thickness of 10 $\mu$m or more between a hygroscopic layer and an inorganic barrier layer disposed closer to a high-humidity atmosphere, thereby effectively suppressing deactivation of the hygroscopic layer and exerting excellent moisture barrier properties over a long period of time. That is, more than a few defects such as cracks are locally formed in the inorganic barrier layer, and moisture intensively flows into the hygroscopic layer through these defects, thereby accelerating the wastage of hygroscopic layer; however, in the technology of Patent Document 4, the organic layer having a large thickness (10 $\mu$m or more) rapidly diffuses the moisture flowing through the defects in the inorganic barrier layer, and hence, the disadvantage of locally concentrated moisture flow into the hygroscopic layer is effectively prevented, and whereby the wastage of the hygroscopic layer is reduced, and excellent moisture barrier properties are exerted over a long period of time.

However, extended service life of the moisture barrier properties according to Patent Document 4 has its limit, and furthermore, it is desired to exert the moisture barrier properties over a long period of time.

Citation List

Patent Document

Patent Document 1: WO2014/123197
Patent Document 2: JP 2014-168949 A
Patent Document 3: JP 2014-168950 A
Patent Document 4: JP 6657651 B

Summary of Invention

Technical Problem

Accordingly, an object of the present invention is to provide a moisture barrier laminated film which includes an inorganic barrier layer and a hygroscopic layer, in which deactivation of the hygroscopic layer is effectively suppressed, and which stably exerts excellent barrier properties against moisture over a longer period of time.

Solution to Problem

The present inventors have further advanced the technology of Patent Document 4, and envision that a layer (quasi-hygroscopic layer) having hygroscopic performances not as high as but similar to those of a hygroscopic layer is provided between an inorganic barrier layer and a hygroscopic layer, thereby suppressing the deactivation (wastage) of the hygroscopic layer and allowing moisture barrier properties to be exerted over a longer period of time.

According to the present invention, there is provided a moisture barrier laminated film including an inorganic barrier layer and a hygroscopic layer on a plastic base material, the inorganic barrier layer being disposed closer to a high moisture atmosphere than the hygroscopic layer,

the moisture barrier laminated film being characterized in that a quasi-hygroscopic layer is provided between the inorganic barrier layer and the hygroscopic layer, and

the water solubility coefficients of the hygroscopic layer and of the quasi-hygroscopic layer satisfy a condition represented by the following expression (1):

$$0.1S2 \le S1 < S2 \ (1)$$

where,

S1 is a water solubility coefficient at 85°C in the quasi-hygroscopic layer, and

S2 is a water solubility coefficient at 85°C in the hygroscopic layer.

In the moisture barrier laminated film of the present invention, the following aspects are suitably employed.

(1) The S1 is 60% or less of the S2.

(2) The hygroscopic layer is a layer in which a hygroscopic agent is dispersed in a hygroscopic polymer matrix, and the quasi-hygroscopic layer is formed of a resin containing no hygroscopic agent.

(3) The hygroscopic agent in the hygroscopic polymer matrix is a granular hygroscopic agent.

(4) The quasi-hygroscopic layer has a thickness less than 10 $\mu$m.

(5) A hydrophobic layer formed of a hydrophobic resin having a solubility coefficient S3 that is smaller than 0.06S2 (S2 is as described above) (S3 is a solubility coefficient of the hydrophobic resin) is provided between the hygroscopic layer and the quasi-hygroscopic layer.

(6) A moisture diffusion layer formed of a resin having a water diffusion coefficient D of $5 \times 10^{-8}$ cm$^2$/sec or more as measured at 85°C is provided between the hygroscopic layer and the quasi-hygroscopic layer or between the inorganic barrier layer and the quasi-hygroscopic layer.

(7) The quasi-hygroscopic layer is formed of polyamide.

(8) The inorganic barrier layer is disposed closer to a low moisture atmosphere than the hygroscopic layer.

Advantageous Effects of Invention

The moisture barrier laminated film of the present invention includes an inorganic barrier layer and a hygroscopic layer, and has a basic structure in which the inorganic barrier layer is disposed closer to a high moisture atmosphere than the hygroscopic layer. That is, when this laminated film is attached to a device such as an organic EL device, the inorganic barrier layer is disposed closer to the atmosphere than the hygroscopic layer, and therefore the hygroscopic layer is located closer to the inside of the device than the inorganic barrier layer. For this reason, it has a structure in which moisture permeates from the inorganic barrier layer side toward the hygroscopic layer side. Such a basic structure is also adopted in, for example, a moisture barrier laminate of Patent Document 4.

The moisture barrier laminated film of the present invention having such a basic structure is mainly characterized in that,

between the inorganic barrier layer and the hygroscopic layer is provided a quasi-hygroscopic layer that satisfies the conditions represented by the following expression (1):

$$0.1S2 \le S1 < S2 \ (1)$$

preferably, S1 $\le$ 0.6 $\times$ S2

where

S1 is a water solubility coefficient at 85°C in the quasi-hygroscopic layer, and

S2 is a water solubility coefficient at 85°C in the hygroscopic layer. As can be understood from the foregoing conditional expression for the water solubility coefficients, this quasi-hygroscopic layer is a layer exhibiting a certain degree of hygroscopicity, but not as much as that of the hygroscopic layer.

That is, since such a quasi-hygroscopic layer is provided, the moisture barrier laminated film of the present invention can exert excellent hygroscopicity exhibited by the hygroscopic layer over a long period of time, and can make the best use of the moisture barrier properties.

In the present invention, such a quasi-hygroscopic layer can be formed at an extremely low cost, and thus the industrial advantage is extremely large, and the greatest advantage is that, when it is combined with another layer, the moisture barrier properties can be further enhanced while avoiding an increase in cost.

Brief Description of Drawings

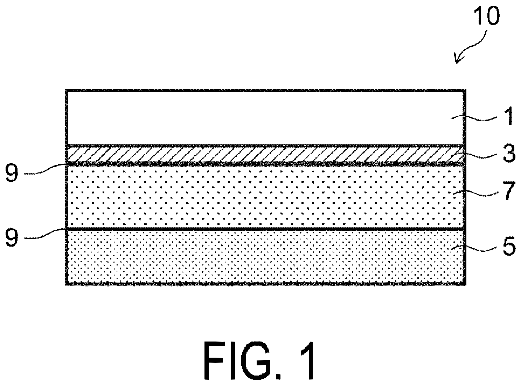

FIG. 1 is a diagram illustrating an example of a layer structure of a moisture barrier laminated film of the present invention.

Description of Embodiments

Basic Layer Structure of Moisture Barrier Laminated Film of Present Invention

The moisture barrier laminated film of the present invention is used as a so-called sealing material, which is attached to a device for which moisture intrusion is not preferred. Referring to FIG. 1 illustrating a layer structure of such a laminated film, a laminated film denoted by 10 as a whole has a basic structure in which an inorganic barrier layer 3 and a hygroscopic layer 5 are included on a plastic base material 1, and this inorganic barrier layer 3 is located closer to a high moisture atmosphere than the hygroscopic layer 5. That is, when the laminated film is attached, as a sealing material, to a device, the inorganic barrier layer 3 is located outwardly on the device (toward high moisture atmosphere), and the hygroscopic layer 5 is located inwardly on the device (toward low moisture atmosphere).

In such a basic structure, moisture flowing from the high moisture atmosphere outside the device to the low moisture atmosphere inside the device is blocked by the inorganic barrier layer 3 provided on the plastic base material 1, and moisture having passed through the inorganic barrier layer 3 is captured in the hygroscopic layer 5. Such a basic structure is widely adopted in known moisture barrier laminated films as well.

Meanwhile, there is a limitation of the amount of moisture that the hygroscopic layer 5 can absorb, and as a matter of course, moisture trap capacity is lost after absorbing moisture to the limitation. That is, the moisture barrier properties of such a laminated film 10 greatly depend on the limitation of the amount of moisture that the hygroscopic layer 5 can absorb. Therefore, the thickness of the hygroscopic layer 5 needs to be increased in order to exert the moisture barrier properties over a long period of time, but an increase in the thickness of the hygroscopic layer 5 results in a volume change due to swelling of the hygroscopic layer 5, and this volume change is likely to cause delamination, and deterioration in the moisture barrier properties occurs due to the delamination. In addition, the manufacturing cost of the hygroscopic layer 5 is higher than that of a normal resin layer, and an increase in the thickness of the hygroscopic layer 5 is also disadvantageous in terms of manufacturing costs.

However, in the moisture barrier laminated film 10 of the present invention, a quasi-hygroscopic layer 7 is provided between the inorganic barrier layer 3 and the hygroscopic layer 5, that is, at a position closer to a high moisture atmosphere than the hygroscopic layer 5. As will be described in detail later, this quasi-hygroscopic layer 7 does not exhibit the same level of hygroscopicity as that of the hygroscopic layer 5 but exhibits a certain degree of hygroscopicity, thereby enabling prolonging of the time it takes for the amount of moisture absorbed in the hygroscopic layer 5 to reach the limitation of moisture amount without increasing the thickness of the hygroscopic layer 5 greater than necessary, and exerting excellent moisture barrier properties over a long period of time.

Moreover, the quasi-hygroscopic layer 7 has an advantage of low manufacturing cost, and further, even when the thickness is as thin as less than 10 μm, the quasi-hygroscopic layer 7 greatly contributes to prolonging the service life of the moisture barrier properties.

For example, as compared with the case of increasing the thickness of the hygroscopic layer 5 in order to realize the long service life of the moisture barrier properties, providing the quasi-hygroscopic layer 7 is advantageous not only in that delamination can be prevented from occurring but also in terms of cost. The foregoing Patent Document 4 is a technology in which an organic layer for moisture diffusion is provided, thereby mitigating localized moisture inflow from defects such as cracks present in the inorganic barrier layer 3 and preventing a decrease in performance of the hygroscopic layer 5 in a short period of time, but in this case, it is necessary to provide a thick organic layer having a thickness of 10 μm or more. However, the quasi-hygroscopic layer 7 is not for exhibiting a moisture diffusion function, but for merely absorbing moisture in an auxiliary manner, and therefore, the thickness of the quasi-hygroscopic layer may be smaller than 10 $\mu$m. For this reason, the moisture barrier properties can be improved by combining it with various known technologies. This point will also be described later.

The quasi-hygroscopic layer 7 noted above is bonded and fixed to the inorganic barrier layer 3 or to the hygroscopic layer 5 with an adhesive layer 9 interposed therebetween as necessary.

Hereinafter, each layer will be described.

Plastic Base Material 1

The plastic base material 1 serves as a base for the inorganic barrier layer 3, and is usually molded from a thermoplastic or thermosetting resin by injection or co-injection molding, extrusion or co-extrusion molding, film or sheet molding, compression molding, cast polymerization, or the like, depending on the shape thereof. In general, a thermoplastic resin is suitable from the viewpoint of moldability, cost, and the like.

Examples of such a thermoplastic resin include the following.

Olefin-based resin:
Polyolefins such as low density polyethylene, high density polyethylene, polypropylene, poly-1-butene, poly(4-methyl-1-pentene), or random or block copolymers of $\alpha$-olefins such as ethylene, propylene, 1-butene, and 4-methyl-1-pentene, and moreover cyclic olefin copolymers and cyclic olefin polymers;
Ethylene-vinyl compound copolymers:
Ethylene-vinyl acetate copolymers, ethylene-vinyl alcohol copolymers, ethylene-vinyl chloride copolymers, etc.;
Styrene-based resins:
Polystyrene, acrylonitrile-styrene copolymer, ABS, $\alpha$-methylstyrene-styrene copolymer, etc.;
Polyvinyl compounds:
Polyvinyl chloride, polyvinylidene chloride, vinyl chloride-vinylidene chloride copolymer, polymethyl acrylate, polymethyl methacrylate, etc.;
Polyamide:
Nylon 6, nylon 6-6, nylon 6-10, nylon 11, nylon 12, etc.;
Thermoplastic polyester:
Polyethylene terephthalate (PET), polybutylene terephthalate, polyethylene naphthalate (PEN), etc.;
Others:

Polycarbonate, polyphenylene oxide, polyimide resin, polyamideimide resin, polyetherimide resin, fluororesin, allyl resin, polyurethane resin, cellulose resin, polysulfone resin, polyethersulfone resin, ketone resin, amino resin, and biodegradable resins such as polylactic acid;
Furthermore, blends of the foregoing resins or modified products of these resins by copolymerization as appropriate (e.g., an acid-modified olefin resin or the like) may be used.

The plastic base material 1 can also be formed of a gas barrier resin or the like, such as an ethylene-vinyl alcohol copolymer, having excellent oxygen barrier properties, and may have a multilayer structure including a layer formed of such a gas barrier resin. That is, the inorganic barrier layer 3 can be formed on a base of the plastic base material 1 containing such a gas barrier resin.

In the present invention, a film of a polyester resin such as polyethylene terephthalate (PET), polybutylene terephthalate, or polyethylene naphthalate, of a polyimide resin, or of a cyclic olefin-based resin such as a cyclic olefin copolymer or a cyclic olefin polymer is more suitably used as the plastic base material 1 from the viewpoint of availability, cost, moldability, or a certain degree of barrier properties against oxygen and moisture, and moreover from the viewpoint of suitability for a base of the inorganic barrier layer 3 to be described later.

The thickness of the plastic base material 1 mentioned above is not particularly limited, but when the thickness is excessively large, the moisture permeability increases, and the aforesaid moisture barrier properties are liable to be deteriorated. In addition, there may be a case where its flexibility is compromised, and its handling becomes difficult. Therefore, the thickness of the plastic base material 1 is usually 200 $\mu$m or less, more preferably 125 $\mu$m or less, and within this range, an appropriate moisture permeability can be ensured, moreover, the thickness is preferably adjusted such that the film formation of the inorganic barrier layer 3 can be performed effectively, for example, 20 $\mu$m or more.

Inorganic Barrier Layer 3

In the present invention, the inorganic barrier layer 3 located closer to a high moisture atmosphere is an inorganic matter vapor deposition film formed by physical vapor deposition typified by sputtering, vacuum deposition, ion plating, or the like, chemical vapor deposition typified by plasma CVD, or the like, examples thereof include a film formed of various metals or metal oxides, and a vapor deposition film formed by plasma CVD is preferable in terms of being evenly deposited even on uneven surfaces in particular and exerting excellent barrier properties not only against moisture but also against oxygen and the like. Such an inorganic barrier layer 3 is formed on the aforesaid plastic base material 1.

Note that, the vapor deposited film (inorganic barrier layer 3) by plasma CVD is obtained by a manner in which a plastic base material on which the inorganic barrier layer is to be supported is disposed in a plasma processing chamber held at a predetermined degree of vacuum, a gas (reaction gas) of a metal to form a film or of a compound containing the metal and an oxidizing gas (usually oxygen or NOx gas) are fed together with a carrier gas such as argon and helium as appropriate through a gas supply line to the plasma processing chamber shielded by a metal wall and depressurized to the predetermined degree of vacuum, and in this condition, a glow discharge is created by a microwave electric field, a high-frequency electric field, or the like, plasma is generated by the electrical energy of the discharge and decomposition reaction products of the compound noted above are deposited on the surface of the plastic base material to form a film.

When forming a film by a microwave electric field, the film is formed by irradiating inside the plasma processing chamber with microwaves through a waveguide or the like, and when forming a film by a high-frequency electric field, the plastic base material is disposed so as to be positioned between a pair of electrodes in the plasma processing chamber, and a high-frequency electric field is applied across the electrodes to form the film.

As the reaction gas noted above, it is generally preferable to use a gas of an organometallic compound, for example, an organoaluminum compound such as trialkylaluminum, an organotitanium compound, an organozirconium compound, or an organosilicon compound from the viewpoint of capable of forming a film including a flexible region containing a carbon component on the surface of the plastic base material and including a region having a high degree of oxidation and excellent barrier properties on the flexible region, and in particular, an organosilicon compound is most preferably used from the viewpoint of enabling to relatively easily and efficiently form the inorganic barrier layer 3 with high barrier properties against oxygen.

Examples of such organosilicon compounds that are used include: organic silane compounds such as hexamethyldisilane, vinyltrimethylsilane, methylsilane, dimethylsilane, trimethylsilane, diethylsilane, propylsilane, phenylsilane, methyltriethoxysilane, vinyltriethoxysilane, vinyltrimethoxysilane, tetramethoxysilane, tetraethoxysilane, phenyltrimethoxysilane, methyltrimethoxysilane, and methyltriethoxysilane; and organic siloxane compounds such as octamethylcyclotetrasiloxane, 1,1,3,3-tetramethyldisiloxane, and hexamethyldisiloxane. Moreover, besides these, aminosilane, silazane, or the like can also be used.

The organometallic compounds mentioned above can be used singly, or two or more kinds thereof can be used in combination.

When forming a film by plasma CVD using the reaction gas of the organometallic compound and the oxidizing gas noted above, it is preferable that the glow discharge output (e.g., microwave or high-frequency output) be lowered, the film formation be started at low output, and then film formation be carried out by plasma reaction at high output.

That is, organic groups (such as $CH_3$, $CH_2$) contained in the molecule of the organometallic compound usually volatilize as $CO_2$, but at low output, some of the organic groups are not decomposed to $CO_2$, and are deposited on the surface of the plastic base material and will be contained in the film. On the other hand, enhancing the output increases the organic groups decomposed to $CO_2$. Therefore, increasing the output enables reducing the C content in the film and forming a film with a high degree of oxidation of the metal contained in the organometallic compound. However, a film with a high degree of oxidation of the metal has extremely high barrier properties against gases such as oxygen, but is poor in flexibility and insufficient in adhesion to the plastic base material, whereas a film with a low degree of oxidation of the metal and a high content of organic components has insufficient barrier properties against gases, but is highly flexible and exhibits high adhesion to the plastic base material.

As can be understood from the foregoing description, in the present invention, an organometallic compound is used as a reaction gas and film formation is carried out at a low output in the initial stage of film formation by plasma CVD and then the output is increased to perform film formation, whereby a high adhesion region containing a large amount of organic components (carbon) is formed in a portion in contact with the surface of the plastic base material, and thereon is formed a high gas barrier region with a high degree of oxidation of the metal.

Therefore, in order to ensure excellent gas barrier properties, the inorganic barrier layer 3 in the present invention preferably includes a high oxidation degree region in which the degree of oxidation x is from 1.5 to 2.0, where x is the degree of oxidation of a metal (M) (x = atomic ratio of O to M (O/M)). In addition, an organic region having a carbon (C) concentration of 20 element% or more based on three elements of metal (M), oxygen (O), and carbon (C) is preferably formed on the lower side of this high oxidation degree region (the side in contact with the surface of the plastic base material). Furthermore, this metal (M) is most preferably silicon (Si).

Note that, the high oxidation degree region in the inorganic barrier layer 3 is preferably present at a percentage of 60% or more of the total thickness of the inorganic barrier layer 3, and the organic region preferably has a thickness of from about 5 to 40% of the total thickness of the inorganic barrier layer 3 and is formed on the side contact with the surface of the plastic base material.

When the inorganic barrier layer 3 including the organic region and the high oxidation degree region mentioned above is deposited by plasma CVD, the glow discharge output is slightly different between the case using microwaves and the case using high-frequency waves. For example, in the case using microwaves, the organic region is formed at a low output of from about 30 to 100 W, and the high oxidation degree region is deposited at a high output of 90 W or more. In the case using high-frequency waves, the organic region is formed at a low output of from about 20 to 80 W, and the high oxidation degree region is deposited at a high output of 100 W or more.

The deposition time needs to be set such that the thickness of each region is within the aforesaid range.

The total thickness of the inorganic barrier layer 3 mentioned above varies depending on the intended use of the moisture barrier laminated film 10 or the required level of barrier properties, but the thickness should be generally adjusted such that the water vapor permeance can be ensured to be $10^{-2}$ g/m$^2$·day/atom or less, particularly $10^{-3}$ g/m$^2$·day/atom or less, and is generally required to be from about 4 to 500 nm, particularly from about 30 to 400 nm, although it varies depending on the proportion of the high oxidation degree region mentioned above.

Note that, the inorganic barrier layer 3 mentioned above is commercially available as a gas barrier film in a state of being deposited on the aforesaid plastic base material 1.

Hygroscopic Layer 5

The hygroscopic layer 5 in the moisture barrier laminated film 10 of the present invention can also be referred to as a moisture trap layer. From the viewpoint of enhancing the barrier performance, for example, the water solubility coefficient S2 (the amount of water dissolved per unit volume) at 85°C is preferably in the range of from 0.5 to 4.0 g/cm$^3$·atm, particularly from 0.6 to 3.5 g/cm$^3$·atm. When this value is small, hygroscopicity for trapping the permeated moisture is insufficient, and the moisture barrier properties cannot be sufficiently exhibited. In contrast, when this value is too large, film breakage or delamination is likely to occur due to swelling caused by moisture absorption. That is, by virtue of the presence of such a hygroscopic layer 5, the moisture barrier laminated film 10 of the present invention exhibits excellent moisture barrier properties, and when the film having the arrangement shown in FIG. 1 is attached to a device, moisture intrusion into the device can be effectively prevented.

Such a hygroscopic layer 5 is a layer in which a hygroscopic agent is dispersed in a resin matrix, but is preferably a layer in which a granular adsorbent is dispersed in an ionic polymer as described in the aforesaid Patent Document 4, in particular, when high barrier properties against moisture are required, from the viewpoint of an excellent moisture capturing ability and effectively avoiding deformation such as swelling caused by moisture absorption.

The ionic polymer noted above is for forming the matrix of this hygroscopic layer 5, and examples thereof include: a cationic polymer having a cationic group (such as NH$_2$ group) as an ionic group; and an anionic polymer having an anionic group (such as COONa group, COOH group) as an ionic group, and as the granular adsorbent, a granular adsorbent having a lower ultimate humidity than that of the ionic polymer is generally used.

That is, in the hygroscopic layer 5 whose matrix is the ionic polymer note above, a trace amount of moisture flowing through the aforesaid inorganic barrier layer 3 is absorbed in this matrix (the ionic polymer). The matrix itself shows high hygroscopicity and exhibits the aforesaid high solubility coefficient S2, and hence captures and absorbs moisture without leaking.

Meanwhile, in a case where moisture is merely absorbed in the matrix, the absorbed moisture is liable to be easily released due to an environmental change such as a temperature rise. In addition, moisture intrusion increases the space between the polymer molecules forming the matrix, and as a result, the hygroscopic layer 5 swells and a large increase in volume occurs. However, in a case where an adsorbent having ultimate humidity lower than that of the matrix (the ionic polymer) is dispersed, the moisture absorbed in the matrix is further captured by a hygroscopic agent having higher hygroscopicity (i.e., a lower level of ultimate humidity) than that of the matrix, and not only swelling due to the absorbed water molecules is effectively suppressed, but also the water molecules are confined in the hygroscopic layer 5, and as a result, the release of moisture from the hygroscopic layer 5 is also effectively prevented.

In this way, in a case where the hygroscopic layer 5 is formed by dispersing the adsorbent in the ionic polymer, the hygroscopic layer 5 has a high hygroscopic ability together with a dual function of moisture capturing and confinement, and thus moisture can be captured even under an atmosphere of extremely low humidity, and moisture is captured at a speed sufficiently faster than a speed at which moisture permeates the inorganic barrier layer, and furthermore, moisture is supplemented by the entire layer, and thus, significantly high moisture barrier properties can be achieved without leaking moisture to the outside.

Ionic polymer (cationic polymer);

In the present invention, among the ionic polymers used for forming the matrix as noted above, the cationic polymer is a polymer including a cationic group that can be positively charged in water, for example, a primary to tertiary amino group, a quaternary ammonium group, a pyridyl group, an imidazole group, a quaternary pyridinium, or the like in the molecule. Such a cationic polymer has a strong nucleophilic effect and supplements water by hydrogen bonds, and hence can form a matrix having hygroscopicity.

An acceptable amount of the cationic group in the cationic polymer is generally such that the water absorption rate (JIS K-7209-1984) of the hygroscopic matrix to be formed is 20% or more, particularly from 30% to 45% under an atmosphere of humidity of 80%RH and at 30°C.

Examples of the cationic polymer that can be used include those obtained by polymerizing or copolymerized together with another copolymerizable monomer as appropriate, at least one of cationic monomers typified by: amine-based monomers such as allylamine, ethyleneimine, vinylbenzyltrimethylamine, [4-(4-vinylphenyl)-methyl]-trimethylamine, and vinylbenzyltriethylamine; nitrogen-containing heterocyclic monomers such as vinylpyridine and vinylimidazole; and salts thereof, followed by partial neutralization by acid treatment if needed.

Note that, examples of the other copolymerizable monomer include, but are not limited to, styrene, vinyl toluene, vinyl xylene, $\alpha$-methylstyrene, vinyl naphthalene, $\alpha$-halogenated styrenes, acrylonitrile, acrolein, methyl vinyl ketone, and vinyl biphenyl.

Alternatively, instead of using the cationic monomer noted above, a monomer having a functional group to which a cationic functional group can be introduced, for example, styrene, bromobutylstyrene, vinyl toluene, chloromethylstyrene, vinyl pyridine, vinyl imidazole, $\alpha$-methylstyrene, vinyl naphthalene, or the like is used, and a treatment such as amination or alkylation (quaternary ammonium chloride) can be implemented after polymerization to give a cationic polymer.

In the present invention, among the cationic polymers noted above, allylamine is particularly suitable from the viewpoint of film formability and the like.

The cationic polymer mentioned above is generally produced by radical polymerization by heating using a polymerization initiator, as described in Patent Document 4.

Note that, in the case where the polymerization is carried out using a monomer to which a cationic functional group can be introduced, a treatment to introduce a cationic group, such as amination or alkylation treatment, needs to be implemented after the polymerization.

In the present invention, a crosslinked structure is preferably introduced into a matrix that is formed using the aforesaid cationic polymer in order to ensure the mechanical strength without deteriorating its hygroscopic ability and at the same time to improve the dimensional stability.

That is, when a crosslinked structure is introduced into a hygroscopic matrix, the molecules of the cationic polymer are constrained to each other by crosslinking when the matrix absorbs water, which suppresses volume change due to swelling (moisture absorption), and provides improved mechanical strength and dimensional stability.

The crosslinked structure noted above can be introduced by blending a crosslinking agent into a coating composition for forming the hygroscopic layer 5.

As described in Patent Document 4, for such a crosslinked structure, there can be used a compound including a crosslinkable functional group (e.g., an epoxy group) capable of reacting with a cationic group, and a functional group (e.g., an alkoxysilyl group) capable of forming a siloxane structure in the crosslinked structure through hydrolysis and dehydration condensation,

and particularly, a silane compound represented by the following formula (2) is suitably used:

$$X\text{-}SiR^1_n(OR^2)_{3\text{-}n} \qquad (2)$$

where
X is an organic group having an epoxy group at its terminal,
$R^1$ and $R^2$ are each a methyl group, an ethyl group, or an isopropyl group, and
n is 0, 1, or 2. That is, the crosslinking agent is blended into the coating composition for forming a hygroscopic layer containing the cationic polymer and film formation is performed, thereby enabling introduction of a crosslinked structure.

Ionic polymer (anionic polymer);

The anionic polymer used for forming a hygroscopic matrix is a polymer in which an anionic functional group that can be negatively charged in water, such as a carboxylic acid group, a sulfonic acid group, a phosphonic acid group, or an acidic base formed by partial neutralization of these groups is included in the molecule. The anionic polymer including such a functional group can form a hygroscopic matrix since the functional group supplements water by hydrogen bonds.

The amount of the anionic functional group in the anionic polymer varies depending on the type of the functional group, but as with the aforesaid cationic polymer, an acceptable amount thereof is such that the water absorption rate (JIS K-7209-1984) of the hygroscopic matrix to be formed is 20% or more, particularly from 30% to 45% under an atmosphere of humidity of 80%RH and at 30°C.

As the anionic polymer having such a functional group as noted above, examples thereof that can be used include those obtained polymerizing or copolymerized together with another copolymerizable monomer as appropriate, at least one of anionic monomers typified by: carboxylic acid-based monomers such as methacrylic acid, acrylic acid, and maleic anhydride; sulfonic acid-based monomer such as $\alpha$-halogenated vinyl sulfonic acid, styrene sulfonic acid, and vinyl sulfonic acid; phosphonic acid-based monomer such as vinylphosphoric acid; and salts of these monomers, followed by partial neutralization by alkali treatment if needed.

Note that, examples of the other copolymerizable monomer include, but are not limited to, styrene, vinyl toluene, vinyl xylene, $\alpha$-methylstyrene, vinyl naphthalene, $\alpha$-halogenated styrenes, acrylonitrile, acrolein, methyl vinyl ketone, and vinyl biphenyl.

Alternatively, instead of using the anionic monomer noted above, an ester of the anionic monomer or a monomer having a functional group to which an anionic functional group can be introduced, such as styrene, vinyl toluene, vinyl xylene, $\alpha$-methylstyrene, vinyl naphthalene, or $\alpha$-halogenated styrenes can be used, and a treatment such as hydrolysis, sulfonation, chlorosulfonation, or phosphonium formation can be implemented after polymerization to give an anionic polymer.

In the present invention, suitable anionic polymers are poly(meth)acrylic acid and partially neutralized products thereof (e.g., those having a moiety that is a Na salt).

The anionic polymer mentioned above is generally produced by radically polymerizing a monomer having an anionic group by heating using a polymerization initiator. When a monomer to which an anionic functional group can be introduced is used as the monomer, a treatment to introduce an anionic group, such as hydrolysis, sulfonation, chlorosulfonation, or phosphonium formation, is required to be implemented after polymerization.

In the present invention, a crosslinked structure is particularly preferably introduced into the hygroscopic matrix formed using the aforesaid anionic polymer noted above, thereby further enhancing the moisture trap ability of the hygroscopic layer 5 and moreover providing further improvement in dimensional stability.

That is, in the case of the anionic polymer, unlike the cationic polymer, water is supplemented only by hydrogen bonds, and hence, a network structure (crosslinked structure) of spaces suitable for moisture absorption is introduced into the matrix, whereby the hygroscopicity can be greatly enhanced. Such a crosslinked structure has, for example, a hydrophobic site such as an alicyclic structure in the network structure, and as a result, the hygroscopic effect of the hydrophilic site is further enhanced.

Furthermore, introducing a crosslinked structure into the hygroscopic matrix causes the molecules of the anionic polymer to be constrained to each other by crosslinking when the matrix absorbs water, thereby suppressing the volume change due to swelling (moisture absorption) and improving the dimensional stability. Such an effect of improving the dimensional stability is the same as that in the case of the aforesaid cationic polymer described above.

As in the case of the cationic polymer, the crosslinked structure is introduced by blending a crosslinking agent into the coating composition for forming the hygroscopic layer 5. As described in Patent Document 4, this crosslinking agent is a compound having two or more crosslinkable functional groups (e.g., epoxy groups) capable of reacting with the ionic groups included in the anionic polymer, and is, for example,

a diglycidyl ester represented by formula (3):

$$G\text{-}O(C{=}O)\text{-}A\text{-}(C{=}O)O\text{-}G \qquad (3)$$

where
G is a glycidyl group, and
A is a divalent hydrocarbon group having an aliphatic ring, such as a cycloalkylene group. That is, the crosslinking agent is blended into the coating composition for forming a hygroscopic layer containing the anionic polymer and film formation is carried out, thereby enabling introduction of a crosslinked structure.

Hygroscopic agent;

The hygroscopic agent, which is to be dispersed in the hygroscopic layer 5 whose matrix (hygroscopic matrix) is made of the ionic polymer mentioned above, has ultimate humidity lower than that of the ionic polymer (cationic or anionic polymer) forming the matrix noted above, and has extremely high hygroscopic performance. Dispersing the hygroscopic agent having hygroscopicity higher than that of the matrix in this manner causes moisture absorbed in the matrix formed by the aforesaid ionic polymer to be immediately captured by the hygroscopic agent, and the absorbed moisture is effectively confined in the matrix, and not only the hygroscopic ability for moisture can be effectively exerted even in an extremely low humidity atmosphere, but also swelling of the hygroscopic layer 5 due to moisture absorption is effectively suppressed.

As the hygroscopic agent having high hygroscopicity as noted above, provided that the ultimate humidity is lower than that of the ionic polymer, a hygroscopic agent having ultimate humidity of 6% or less under environmental conditions of humidity of 80%RH and a temperature of 30°C is suitably used, for example, as shown in Examples described later. That is, when the ultimate humidity of this hygroscopic agent is higher than that of the ionic polymer, the moisture absorbed in the matrix is not sufficiently confined, and moisture release or the like is likely to occur, so that significant improvement in moisture barrier properties cannot be expected. Also, even when the ultimate humidity is lower than that of the ionic polymer, if the ultimate humidity measured under the conditions noted above is higher than the range noted above, for example, trapping of moisture in a low-humidity atmosphere becomes insufficient, and there is a concern that the moisture barrier properties are not fully exerted.

The hygroscopic agent as noted above generally has a water absorption rate (JIS K-7209-1984) of 50% or more in an atmosphere of humidity of 80%RH and a temperature of 30°C, and examples thereof include inorganic and organic hygroscopic agents.

Examples of the inorganic hygroscopic agent include zeolite, alumina, activated carbon, clay minerals such as montmorillonite, silica gel, calcium oxide, and magnesium sulfate.

Examples of the organic hygroscopic agent include a crosslinked product of an anionic polymer or of a partially neutralized product thereof. Examples of the anionic polymer include those obtained by polymerizing or copolymerizing with another monomer, at least one of anionic monomers typified by carboxylic acid-based monomers (such as (meth) acrylic acid, maleic anhydride), sulfonic acid-based monomers (such as halogenated vinylsulfonic acid, styrenesulfonic acid, vinylsulfonic acid), phosphonic acid-based monomers (such as vinyl phosphoric acid), and salts of these monomers. In an intended use where transparency is required in particular, an organic hygroscopic agent is effective. For example, fine particles of crosslinked sodium poly(meth)acrylate and the like are typical organic hygroscopic agents.

In the present invention, from the viewpoint of increasing the specific surface area and exhibiting high hygroscopicity, a granular hygroscopic agent having a small particle diameter is preferable (e.g., the average primary particle diameter is 100 nm or less, particularly 80 nm or less), and in particular, a granular hygroscopic agent of the organic polymer having a small particle diameter is the most suitable.

That is, the granular hygroscopic agent of the organic polymer has extremely good dispersibility in an ionic polymer matrix, and not only it can be evenly dispersed, but also its particle can be made fine and uniform in a spherical shape when emulsion polymerization, suspension polymerization, or the like is employed as a polymerization method for producing the granular hygroscopic agent, and extremely high transparency can be ensured when a certain amount or more of the granular hygroscopic agent is blended.

Moreover, as for the organic fine hygroscopic agent, the aforesaid ultimate humidity is remarkably low, and not only high hygroscopicity is exhibited but also volume change due to swelling can be extremely small by virtue of crosslinking, and therefore the organic fine hygroscopic agent is the most suitable in reducing the humidity to an absolute dry state or to a state close to an absolute dry state while suppressing the volume change.

Examples of fine particles of such an organic hygroscopic agent include crosslinked sodium polyacrylate fine particles (average particle diameter: about 70 nm), which are commercially available in the form of a colloidal dispersion (pH = 10.4) from Toyobo Co., Ltd. under the trade name of TAFTIC HU-820E.

In the present invention, the amount of the hygroscopic agent as noted above is set according to the type of the ionic polymer from the viewpoint of sufficiently exerting the properties thereof, significantly improving the moisture barrier properties, effectively suppressing the dimensional change due to swelling, and at the same time ensuring moisture barrier properties higher than the barrier properties exhibited by the inorganic barrier layer 3 over a long period of time.

For example, for the hygroscopic layer 5 in which the ionic polymer mentioned above is used as a matrix, and an adsorbent is dispersed in the matrix, when the matrix is formed of a cationic polymer, the hygroscopic agent is preferably present in an amount of 50 parts by weight or more, particularly from 100 to 900 parts by weight, and more preferably from 200 to 600 parts by weight per 100 parts by weight of the ionic polymer in the hygroscopic layer 5. When the matrix is formed of an anionic polymer, the hygroscopic agent is preferably present in an amount of 50 parts by weight or more, particularly from 100 to 1300 parts by weight, and more preferably from 150 to 1200 parts by weight per 100 parts by weight of the anionic polymer in the hygroscopic layer 5.

The thickness of the hygroscopic layer 5 mentioned above varies depending on the intended use of the moisture barrier laminated film 10 and the required level of barrier properties, but the thickness is required to be set to from about 1 to 20 $\mu$m, particularly from about 1 to 15 $\mu$m in the case of ensuring a water vapor permeance of $10^{-2}$ g/m$^2$·day/atom or less, particularly $10^{-3}$ g/m$^2$·day/atom or less. If the thickness is small, the amount of absorbed moisture reaches the upper limit in a short period of time, and the moisture barrier properties are compromised. In contrast, if the thickness is excessively large, the amount of moisture that can be absorbed increases, but the increased amount of the absorbed moisture increases the volume change due to swelling, and as a result, delamination is likely to occur.

Quasi-Hygroscopic Layer 7

In the present invention, the quasi-hygroscopic layer 7 is a layer exhibiting a certain degree of hygroscopicity that is not as high as that of the hygroscopic layer 5, and

specifically is a layer that satisfies the condition represented by the following expression (1):

$$0.1S2 \leq S1 < S2 \ (1)$$

where
S1 is a water solubility coefficient at 85°C in the quasi-hygroscopic layer 7, and
S2 is a water solubility coefficient at 85°C in the hygroscopic layer 5. That is, auxiliary moisture absorption is implemented by providing such a quasi-hygroscopic layer 7 between the inorganic barrier layer 3 and the hygroscopic layer 5, whereby moisture having passed through the inorganic barrier layer 3 is once captured in the quasi-hygroscopic layer 7, and all of such moisture is prevented from flowing into the hygroscopic layer 5, so that excellent characteristics of the hygroscopic layer 5 are not deactivated, and performance of the hygroscopic layer 5 can be exerted for a long period of time.

Therefore, as indicated in the expression (1) noted above, the solubility coefficient S1 in such a quasi-hygroscopic layer 7 only needs to be smaller than the solubility coefficient S2 of the hygroscopic layer 5; however, when the solubility coefficient S1 shows a value close to the solubility coefficient S2, the material forming the quasi-hygroscopic layer is almost the same as the material forming the hygroscopic layer 5, and the merit (swelling suppression and cost reduction) of providing the quasi-hygroscopic layer 7 is compromised. For this reason, the solubility coefficient S1 of the quasi-hygroscopic layer 7 is preferably 60% or less of the solubility coefficient S2. In a case where the solubility coefficient S1 is lower than 10% of the solubility coefficient S2 (S1 < 0.1S2), the hygroscopicity is too low, and thus the function of prolonging the hygroscopic service life of the hygroscopic layer 5 becomes unsatisfactory.

In the present invention, the quasi-hygroscopic layer 7 satisfying the condition noted above is formed only of a resin satisfying the condition of the expression (1) without blending a hygroscopic agent, for example. Such a quasi-hygroscopic layer 7 can be formed at a lower cost than the hygroscopic layer 5 because no hygroscopic agent is blended.

Examples of the resin that satisfies the condition of the expression (1) and is used to form the quasi-hygroscopic layer 7 include an ionic polymer having a lower concentration of cationic groups or anionic groups as compared with the ionic polymer used to form the hygroscopic layer 5, and in particular, polyamide, an ethylene-vinyl alcohol copolymer, an amino resin, polylactic acid, and the like are suitable, and polyamide is most suitable, in terms of inexpensiveness as compared with the ionic polymer.

Such polyamide can also be used as the plastic base material 1 that serves as a base for the aforesaid inorganic barrier layer 3, and typical examples thereof include nylon 6, nylon 6-6, nylon 6-10, nylon 11, and nylon 12.

The thickness of the quasi-hygroscopic layer 7 mentioned above is preferably less than 10 $\mu$m, particularly within a range of from 2 to 8 $\mu$m. If the thickness is larger than necessary, the volume change thereof due to swelling together with that of the hygroscopic layer 5 becomes large, and delamination is likely to occur. In contrast, if the thickness is too small, it is difficult to prolong the service life of the hygroscopic layer 5, by virtue of auxiliary moisture absorption.

Other Resin Layers

In the present invention, a layer other than the quasi-hygroscopic layer 7 can be provided between the inorganic barrier layer 3 and the hygroscopic layer 5.

For example, in the example of FIG. 1, the quasi-hygroscopic layer 7 and the hygroscopic layer 5 are provided continuously on the inorganic barrier layer 3, but an adhesive layer 9 may be provided in order to firmly fix the quasi-hygroscopic layer 7 to the inorganic barrier layer 3 and to the hygroscopic layer 5. Such an adhesive layer 9 is considerably thin, and has a thickness of, for example, from about 1 to 6 $\mu$m.

The adhesive used for forming the adhesive layer 9 noted above is suitably an epoxy-based adhesive or a urethane-based adhesive known as a dry laminate adhesive.

Epoxy-based adhesive;

The epoxy-based adhesive noted above is an adhesive exerting adhesion when a liquid epoxy resin is cured with an epoxy curing agent.

Such an epoxy resin is a liquid resin having an epoxy group in the molecule, and typical examples thereof include those obtained by reaction of epichlorohydrin with a phenol compound, an amine compound, a carboxylic acid, or the like, and those obtained by oxidation of an unsaturated compound such as butadiene with an organic peroxide or the like, and any type of epoxy resin can be used.

Specific examples of epoxy-based adhesive include, but are not limited to, bisphenol A type or bisphenol F type epoxy resins, novolac type epoxy resins, cyclic aliphatic type epoxy resins, long chain aliphatic type epoxy resins, glycidyl ester type epoxy resins, and glycidyl amine type epoxy resins.

In the present invention, a glycidylamine type epoxy resin is particularly suitable in terms that an adhesive layer having a high elastic modulus can be formed.

Furthermore, as the epoxy curing agent, a known epoxy curing agent such as an amine-based curing agent, an acid anhydride or a polyamide can be used, and an amine-based curing agent, in particular, an aromatic polyamine such as meta-phenylenediamine is suitably used from the viewpoint that a coating film (adhesive layer) having a particularly high elastic modulus and easily conforming to thermal shrinkage can be formed.

The ratio between the amount of the epoxy resin and the amount of the curing agent needs to be set according to the epoxy equivalent of the epoxy resin so that a sufficient cured film is formed.

Urethane-based adhesive;

The urethane-based adhesive includes a reaction product of isocyanate with a (meth)acrylic compound or a polyester polyol. This adhesive usually contains a known curing catalyst such as an amine-based catalyst, a metal catalyst, or a phosphoric acid-modified compound. The amount of the curing catalyst is set according to the type of the curing catalyst so that a dense cured film (adhesive layer) can be formed at a temperature and for a time not causing thermal deformation of the base resin.

The polyol used for forming the polyurethane adhesive is a compound having two or more OH groups per molecule, and typical examples thereof include the following compounds.

Di-, tri-, tetra-, penta-, and hexa-hydroxy compounds;
Polyester containing two or more OH groups in one molecule (Polyester polyol);
Polyether containing two or more OH groups in one molecule (Polyether polyol);
Polycarbonate containing two or more OH groups in one molecule (Polycarbonate polyol);
Polycaprolactone containing two or more OH groups in one molecule (Polycaprolactone polyol);
Acrylic polymer containing two or more OH groups in one molecule (Polyacrylic polyol);

The most suitable polyol in the present invention is a polyester polyol.

The polyester polyol noted above is a polymer obtained by a condensation reaction of a polybasic acid such as adipic acid or phthalic acid with a polyol. Examples of the polyol to be reacted with the polybasic acid include: aliphatic polyols such as ethylene glycol, propylene glycol, neopentyl glycol, and pentaerythritol; aromatic alcohols such as dihydroxynaphthalene, trihydroxynaphthalene, and bisphenol A; and sulfur-containing polyols such as bis-[4-(hydroxyethoxy)phenyl]sulfide.

The polyisocyanate to be reacted with the polyol is a compound having two or more NCO groups per molecule. Specific examples thereof include, but are not limited to, the following compounds.

Aliphatic isocyanates such as ethylene diisocyanate, trimethylene diisocyanate, and tetramethylene diisocyanate;
Alicyclic isocyanates such as isophorone diisocyanate, norbornane diisocyanate, bis(isocyanatomethyl)cyclohexane, 2-isocyanatomethyl-3-(3-isocyanatopropyl)-5-isocyanatomethyl-bicyclo[2,2,1]-heptane;
Aromatic isocyanates such as xylylene diisocyanate, bis(isocyanatoethyl)benzene, bis(isocyanatomethyl)naphthaline, and bis(isocyanatomethyl) diphenyl ether;
Sulfur-containing aliphatic isocyanates such as thiodiethyl diisocyanate;
Aliphatic sulfide-based isocyanates such as bis[2-(isocyanatomethylthio)ethyl] sulfide;
Aromatic sulfide-based isocyanates such as diphenyl sulfide-2,4'-diisocyanate;
Aromatic disulfide-based isocyanates such as diphenyl disulfide-4,4'-diisocyanate;
Aromatic sulfone-based isocyanates such as diphenylsulfone-4,4'-diisocyanate;
Sulfonic acid ester-based isocyanates such as 4-methyl-3-isocyanatebenzenesulfonyl-4'-isocyanate-phenol ester;
Aromatic sulfonic acid amide-based isocyanates such as 4-methyl-3-isocyanatebenzenesulfonylanilide-3'-methyl-4'-isocyanate; and
Sulfur-containing heterocyclic isocyanates such as thiophene-2,5-diisocyanate;

The polyisocyanate noted above is usually used in such an amount that the amount of isocyanate groups (NCO groups) is from about 0.8 to 1.2 mol per mole of the hydroxyl groups included in the aforesaid polyol.

The epoxy-based adhesive and the urethane-based adhesive mentioned above are applied to a predetermined part (such as the surface of the inorganic barrier layer 3 or of the hygroscopic layer 5) using a volatile organic solvent such as a hydrocarbon-based, alcohol-based, ketone-based, ester-based, or ether-based solvent, and dried to form the adhesive layer 9. The adhesive layer 9 formed in this way is typically cured by being kept at a temperature of from about 30 to 50°C for 24 hours or more.

In the present invention, the quasi-hygroscopic layer 7 can have a thickness smaller than 10 μm, and thus a layer for improving the moisture barrier properties can be provided. This is because the overall thickness of the film 10 can be prevented from becoming thicker than necessary since the quasi-hygroscopic layer 7 can be thin.

For example, a hydrophobic layer formed of a hydrophobic resin having a solubility coefficient S3 smaller than 0.06S2 (S2 is as described above) can be provided between the hygroscopic layer 5 and the quasi-hygroscopic layer 7. Such a hydrophobic layer has a moisture blocking function, as with the inorganic barrier layer 3, and hence is capable of preventing excessive moisture from flowing into the hygroscopic layer 5 and suppressing the wastage of the hygroscopic layer 5.

Such a hydrophobic layer is not limited thereto, but is typically an olefin resin or a polyester resin (e.g., polyethylene terephthalate) that can also be used as the plastic base material 1. The aforesaid epoxy-based adhesive also functions as a hydrophobic resin.

Such a hydrophobic layer needs to have a thickness of from about 1 to 4 μm.

Furthermore, if the thickness of the moisture barrier laminated film 10 can be increased, a moisture diffusion layer formed of a resin (moisture diffusive resin) having a water diffusion coefficient D of $5 \times 10^{-8}$ cm$^2$/sec or more as measured at 85°C can be provided between the hygroscopic layer 5 and the quasi-hygroscopic layer 7 or between the inorganic barrier layer 3 and the quasi-hygroscopic layer 7. This diffusion coefficient D is measured by a method described in Examples described later.

That is, such a moisture diffusion layer is for diffusing moisture that has passed through defects such as cracks included in the inorganic barrier layer 3, and for preventing the moisture from locally concentrating and flowing into the hygroscopic layer 5, thereby enabling suppression of partial wastage of the hygroscopic layer 5. Such a moisture diffusing resin is suitably an olefin-based resin, for example. This olefin-based resin can also be used for formation of the hydrophobic layer noted above, but when it is allowed to function as a moisture diffusion layer, the olefin-based resin needs to have a thickness of 10 μm or more, particularly 20 μm or more, and most preferably has a thickness three times or more than the thickness of the hygroscopic layer 5.

In the present invention, when forming the hydrophobic layer or the moisture diffusion layer mentioned above, the aforesaid epoxy-based adhesive or the urethane-based adhesive can be used as necessary.

In the example of FIG. 1, the inorganic barrier layer 3 is provided on the high moisture atmosphere side, but such an inorganic barrier layer 3 can be provided on the low moisture atmosphere side as well. That is, there may be formed a structure in which the quasi-hygroscopic layer 7, the hygroscopic layer 5, and another layer provided as necessary are disposed between the pair of inorganic barrier layers 3 and 3. In such a layered structure, when the moisture absorption amount of the hygroscopic layer 5 is more than the upper limit and moisture is not trapped in the hygroscopic layer 5 and passes therethrough, such moisture can be blocked by the inorganic barrier layer 3 on the low moisture atmosphere side.

Intended Use

The moisture barrier laminated film of the present invention can exert the excellent moisture trapping ability of the hygroscopic layer 5 for a long period of time by virtue of forming the quasi-hygroscopic layer 7, and also is advantageous in terms of cost.

Moreover, since the quasi-hygroscopic layer 7 can have an extremely thin thickness, various layered structures known per se may be used in combination, whereby super barrier properties against moisture, where a water vapor permeance is 10$^{-5}$ g/m$^2$/day or less, can be achieved without extremely increasing the film thickness.

Such a moisture barrier laminated film 10 of the present invention can be suitably used as films for sealing electronic circuits of various electronic devices such as organic EL elements, solar cells, and electronic paper.

Examples

The excellent performance of the moisture barrier laminated film 10 of the present invention will be described by the following Examples.

Measurement of Water Solubility Coefficient S and Diffusion Coefficient D

Using a high-sensitivity water vapor permeance measuring apparatus ("DELTAPARM" manufactured by Technolox Ltd.), an evaluation sample was set in a measurement cell and a pressure caused by water vapor equivalent to 85°C and 85%RH was created on both sides of the sample, thereby measuring the water vapor transmission rate and calculating a delay time (Δt) required to reach steady-state. The water solubility coefficient S and the diffusion coefficient D of each sample were calculated based on the following equations (1) and (2). Note that, in the following equation, Sa is the thickness of the sample.

$$\text{Diffusion coefficient } D = (Sa)^2/(6 \times \Delta t) \ (1)$$

Solubility coefficient S = water vapor transmission rate/diffusion coefficient D (2)

Measurement of Moisture Permeability ($g/m^2$/day)

Using a high-sensitivity water vapor permeance measuring apparatus ("DELTAPARM" manufactured by Technolox Ltd.), a moisture barrier laminate was set in a measurement cell so that the quasi-hygroscopic layer 7 of the moisture barrier laminate was positioned closer to a high moisture atmosphere than the hygroscopic layer 5, subsequently a pressure caused by water vapor equivalent to 85°C and 85%RH was created on both sides of the moisture barrier laminate, and the water vapor transmission rate was measured.

Retention Time of Trap Performance

In the evaluation noted above, the time before the trap performance was deactivated was evaluated.
The results under an atmospheric condition of 85°C and 85% were rated based on the following criteria.

×: The time before the trap layer was deactivated and the barrier properties were deteriorated by a degree of magnitude from the initial state is less than 50 hours.
○: The time noted above is 50 hours or more.
◎: The time noted above is 200 hours or more.

Evaluation of Delamination After Moisture Absorption

The moisture barrier laminate was stored under an atmospheric environment of 85°C and 85% for 200 hours, thereby allowing absorption of moisture, and then adhesion between the hygroscopic layer 5 and the quasi-hygroscopic layer 7 or the inorganic barrier layer 3 was checked by a T-peel test.
The evaluation criteria are as follows.

○: The retained adhesion is 50% or more of the initial adhesion before moisture absorption.
△: The retained adhesion is less than 50% of the initial adhesion.
×: The retained adhesion is less than 50% of the initial adhesion, and the hygroscopic layer has undergone cohesive failure.

Fabrication of Inorganic Barrier Layer-Coated Polyethylene Terephthalate (PET) Film

A plasma CVD apparatus was used to form an inorganic barrier layer 3 of silicon oxide on one surface of a biaxially oriented PET film having a thickness of 100 $\mu$m. The film forming conditions are indicated below.
A CVD apparatus was used in which a high-frequency output power source having a frequency of 27.12 MHz and a maximum output of 2 kW, a matching box, a metal-type cylindrical plasma processing chamber having a diameter of 300 mm and a height of 450 mm, and an oil rotary vacuum pump for evacuating the processing chamber are included.
A plastic base material was placed on a parallel flat plate in the processing chamber, 3 sccm of hexamethyldisiloxane and 45 sccm of oxygen were introduced, and then high-frequency waves were oscillated by a high-frequency oscillator at an output of 50 W, and film forming was performed for 2 seconds to form an adhesion layer.
Subsequently, high-frequency waves were oscillated by the high-frequency oscillator at an output of 200 W, and film forming was performed for 100 seconds to form the inorganic barrier layer 3 of silicon oxide, whereby an inorganic barrier layer-coated PET film A1 was obtained. The resultant inorganic barrier layer-coated PET film A1 was found to have a water vapor transmission rate of $1 \times 10^{-2}$ $g/m^2$/day as measured under an atmosphere of 40°C and 90%RH.

Preparation of Hygroscopic Coating Liquid A

Polyallylamine (PAA-15C, available from Nittobo Medical Co., Ltd., an aqueous solution product, solid content: 15%) as an ionic polymer was diluted with water so the solid content was 4 wt.% to give a polymer solution.
On the other hand, $\gamma$-glycidoxypropyltrimethoxysilane was used as a crosslinking agent, and dissolved in water so as to be 4 wt.% to prepare a crosslinking agent solution.

Subsequently, the polymer solution and the crosslinking agent solution were mixed so the amount of γ-glycidoxypropyltrimethoxysilane was 15 parts by weight per 100 parts by weight of polyallylamine, thereby preparing a coating solution A having a hygroscopic layer property.

Preparation of Hygroscopic Coating Liquid B

Polyallylamine (PAA-15C, available from Nittobo Medical Co., Ltd., an aqueous solution product, solid content: 15%) as an ionic polymer was diluted with water so the solid content was 5 wt.% to give a polymer solution.

On the other hand, γ-glycidoxypropyltrimethoxysilane was used as a crosslinking agent, and dissolved in water so as to be 5 wt.% to prepare a crosslinking agent solution.

Subsequently, the polymer solution and the crosslinking agent solution were mixed so the amount of γ-glycidoxypropyltrimethoxysilane was 15 parts by weight per 100 parts by weight of polyallylamine, and further, to this mixed solution was added a crosslinked product of sodium polyacrylate (TAFTIC HU-820E manufactured by Toyobo Co., Ltd., a water dispersion product, solid content: 13%) as a hygroscopic agent so as to be 400 parts by weight with respect to the polyallylamine, and the resulting mixture was further adjusted with water so the solid content was 5%, and then well stirred to prepare a coating solution B having a hygroscopic layer property.

Example 1

The hygroscopic coating liquid A prepared as described above was applied, by a bar coater, to the side of the inorganic barrier film A1 on which the inorganic barrier layer 3 had been formed. The applied film was heat-treated in a box-type electric oven under the conditions of a peak temperature of 120°C and a peak temperature retention time of 6 seconds to form a quasi-hygroscopic layer 7 having a thickness of 1 μm, thereby giving a coating film B1.

Subsequently, a hygroscopic coating liquid B obtained above was applied onto the quasi-hygroscopic layer 7 by a bar coater. The applied film was heat-treated in a box-type electric oven under the conditions of a peak temperature of 120°C and a peak temperature retention time of 10 seconds to afford a coating film B2 on which a hygroscopic layer 5 having a thickness of 3 μm was formed.

Subsequently, in a glove box in which a nitrogen concentration was adjusted to 99.95% or more, the surface of the inorganic barrier layer-coated PET film A1 on which the inorganic barrier layer 3 had been formed was dry-laminated onto the surface of the coating film B2 on which the hygroscopic layer 5 had been formed, with a urethane-based adhesive having a thickness of 1.8 μm being interposed therebetween, thereby affording a moisture barrier laminate 1.

Example 2

A moisture barrier laminate 2 was obtained by the same method as in Example 1 except that, in place of the hygroscopic coating liquid B for forming the quasi-hygroscopic layer 7 in Example 1, a main polymer solution (Mitsui Chemicals, Inc., "wpb-341", solid content: 30%) containing water-dispersed urethane-based resin particles (Mw = 1 million, glass transition point = 68°C, average particle diameter: 55 nm) and a coating liquid C that was prepared by blending a blocked isocyanate (Mitsui Chemicals, Inc. "XWB-F206MEDG") as a curing agent into the main polymer solution so the curing agent solid content was 10 parts by weight per 100 parts by weight of the main agent solid content and diluting this blend with a mixed solvent of water and 2-propanol so the solid content was to be 15% were used to form a quasi-hygroscopic layer 7 having a thickness of 3 μm.

Example 3

A moisture barrier laminate 3 was obtained in the same manner as in Example 2 except that, in place of the hygroscopic coating liquid A forming the hygroscopic layer 5 in Example 2, the hygroscopic coating liquid B was used to form a hygroscopic layer 5 having a thickness of 3 μm.

Example 4

A moisture barrier laminate 4 was obtained in the same manner as in Example 1 except that, in place of the hygroscopic coating liquid B for forming the quasi-hygroscopic layer 7 in Example 1, a hygroscopicity polyamide film having a thickness of 25 μm was laminated with the above-described urethane-based adhesive having a thickness of 1.8 μm to form the quasi-hygroscopic layer 7.

Example 5

A moisture barrier laminate 5 was obtained in the same manner as in Example 1 except that, in Example 2, a hydrophobic layer having a thickness of 1 $\mu$m was formed on the quasi-hygroscopic layer 7 by using a coating liquid D prepared by blending a polyisocyanate (Mitsui Chemicals, Inc., "D-110N") as a curing agent into a main polymer solution containing an acrylic resin (ARAKAWA CHEMICAL INDUSTRIES, LTD., "ARACOAT DA-105", solid content: 30%) so as to be 30 parts by weight per 100 parts by weight of the solid content of the main polymer solution, and diluting the blend with methyl ethyl ketone so the solid content was 20%.

Example 6

A moisture barrier laminate was obtained in the same manner as in Example 1 except that, in Example 2, between the inorganic barrier layer 3 and the quasi-hygroscopic layer 7, a moisture diffusion layer was formed by laminating a 12 $\mu$m biaxially oriented PET film with the above-described urethane-based adhesive having a thickness of 1.8 $\mu$m.

Comparative Example 1

A moisture barrier laminate 7 was obtained in the same manner as in Example 1, except that, in Example 1, the quasi-hygroscopic layer 7 was not formed, and by using a bar coater, the hygroscopic coating liquid A was applied to the side of the inorganic barrier film A1 on which the inorganic barrier layer 3 had been formed.

Comparative Example 2

A moisture barrier laminate 8 was obtained in the same manner as in Example 6, except that, in Example 6, the quasi-hygroscopic layer 7 was not formed, and the hygroscopic coating liquid A was applied to the moisture diffusion layer by using a bar coater.

Comparative Example 3

A moisture barrier laminate 9 was obtained in the same manner as in Example 6 except that, in place of the hygroscopic coating liquid B for forming the quasi-hygroscopic layer 7 in Example 1, the coating liquid D was used to form the quasi-hygroscopic layer 7 having a thickness of 3 $\mu$m.

Evaluation Test

Various properties of the moisture barrier laminated films prepared as noted above were measured by the aforesaid methods, and the results are shown in Table 1.

[Table 1]

| | Quasi-hygroscopic layer thickness | Dissolution and diffusion parameters | | | | Water vapor permeance | Trap performance retention time | Adhesion after moisture absorption |
|---|---|---|---|---|---|---|---|---|
| | $\mu m$ | Quasi-hygroscopic layer S1 | Hygroscopic layer S2 | Hydrophobic layer S3 | Diffusion layer D | $g/m^2/day$ | | |
| Example 1 | 1 | 2.2 | 2.5 | - | - | $\leq 5 \times 10^{-3}$ | ○ | △ |
| Example 2 | 3 | 0.5 | 2.5 | - | - | $\leq 5 \times 10^{-3}$ | ○ | ○ |
| Example 3 | 3 | 0.5 | 2.2 | - | - | $8 \times 10^{-3}$ | ○ | ○ |
| Example 4 | 25 | 0.7 | 2.5 | - | - | $\leq 5 \times 10^{-3}$ | ◎ | △ |
| Example 5 | 3 | 0.5 | 2.5 | 0.1 | - | $\leq 5 \times 10^{-3}$ | ◎ | ○ |
| Example 6 | 3 | 0.5 | 2.5 | - | $8 \times 10^{-8}$ | $\leq 5 \times 10^{-3}$ | ◎ | ○ |
| Comparative Example 1 | - | - | 2.5 | - | - | $\leq 5 \times 10^{-3}$ | × | × |
| Comparative Example 2 | - | - | 2.5 | - | $8 \times 10^{-8}$ | $\leq 5 \times 10^{-3}$ | × | × |
| Comparative Example 3 | 1 | 0.1 | 2.5 | - | - | $\leq 5 \times 10^{-3}$ | × | △ |

Reference Signs List

1: Plastic base material
3: Inorganic barrier layer
5: Hygroscopic layer
7: Quasi-hygroscopic layer
9: Adhesive layer
10: Moisture barrier laminated film

**Claims**

1. A moisture barrier laminated film comprising an inorganic barrier layer and a hygroscopic layer on a plastic base material, the inorganic barrier layer being disposed closer to a high moisture atmosphere than the hygroscopic layer, wherein

    a quasi-hygroscopic layer is provided between the inorganic barrier layer and the hygroscopic layer, and water solubility coefficients in the hygroscopic layer and in the quasi-hygroscopic layer satisfy a condition represented by:

$$0.1S2 \leq S1 < S2 \ (1)$$

    where

    S1 is a water solubility coefficient at 85°C in the quasi-hygroscopic layer, and
    S2 is a water solubility coefficient at 85°C in the hygroscopic layer.

2. The moisture barrier laminated film according to claim 1, wherein the S1 is 60% or less of the S2.

3. The moisture barrier laminated film according to claim 1, wherein

    the hygroscopic layer is a layer in which a hygroscopic agent is dispersed in a hygroscopic polymer matrix, and the quasi-hygroscopic layer is formed of a resin containing no hygroscopic agent.

4. The moisture barrier laminated film according to claim 3, wherein the hygroscopic agent in the hygroscopic polymer matrix is a granular hygroscopic agent.

5. The moisture barrier laminated film according to claim 1, wherein the quasi-hygroscopic layer has a thickness of less than 10 $\mu$m.

6. The moisture barrier laminated film according to claim 1, wherein a hydrophobic layer formed of a hydrophobic resin having a solubility coefficient S3 smaller than 0.06S2 (S2 is as described above) is provided between the hygroscopic layer and the quasi-hygroscopic layer.

7. The moisture barrier laminated film according to claim 1, wherein a moisture diffusion layer formed of a resin having a water diffusion coefficient D of $5 \times 10^{-8}$ cm$^2$/sec or more as measured at 85°C is provided between the hygroscopic layer and the quasi-hygroscopic layer or between the inorganic barrier layer and the quasi-hygroscopic layer.

8. The moisture barrier laminated film according to claim 1, wherein the quasi-hygroscopic layer is formed of polyamide.

9. The moisture barrier laminated film according to claim 1, further comprising an inorganic barrier layer disposed closer to a low moisture atmosphere than the hygroscopic layer.

FIG. 1

## INTERNATIONAL SEARCH REPORT

| International application No. |
|---|
| **PCT/JP2024/003310** |

| A. | CLASSIFICATION OF SUBJECT MATTER |
|---|---|

***B32B 9/00***(2006.01)i
FI:   B32B9/00 A

According to International Patent Classification (IPC) or to both national classification and IPC

| B. | FIELDS SEARCHED |
|---|---|

Minimum documentation searched (classification system followed by classification symbols)

B321/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2017/030047 A1 (TOYO SEIKAN GROUP HOLDINGS LTD.) 23 February 2017 (2017-02-23)<br>claims, paragraphs [0067], [0071], [0111], table 1 | 1-9 |
| X | JP 2021-37675 A (DAI NIPPON PRINTING CO., LTD.) 11 March 2021 (2021-03-11)<br>claims, paragraphs [0010], [0032], [0057], [0060], examples, fig. 4 | 1-2, 6-7 |
| X | JP 2011-20334 A (DAI NIPPON PRINTING CO., LTD.) 03 February 2011 (2011-02-03)<br>claims, paragraphs [0045], [0054], [0063], [0066] | 1-2, 5 |
| A | JP 2019-10775 A (KYODO PRINTING CO., LTD.) 24 January 2019 (2019-01-24)<br>entire text | 1-9 |
| P, A | WO 2023/145919 A1 (DAI NIPPON PRINTING CO., LTD.) 03 August 2023 (2023-08-03)<br>entire text | 1-9 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/003310**

| Patent document cited in search report | Publication date (day/month/year) | Patent family member(s) | Publication date (day/month/year) |
|---|---|---|---|
| WO 2017/030047 A1 | 23 February 2017 | US 2018/0236757 A1 claims, paragraphs [0148], [0154], [0258], table 1 EP 3339019 A1 KR 10-2018-0042321 A CN 108136727 A | |
| JP 2021-37675 A | 11 March 2021 | (Family: none) | |
| JP 2011-20334 A | 03 February 2011 | (Family: none) | |
| JP 2019-10775 A | 24 January 2019 | (Family: none) | |
| WO 2023/145919 A1 | 03 August 2023 | JP 2023-111877 A JP 2023-111878 A | |

Form PCT/ISA/210 (patent family annex) (July 2022)

**EP 4 670 965 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014123197 A
- JP 2014168949 A
- JP 2014168950 A
- JP 6657651 B